# EUROPÄISCHE PATENTSCHRIFT

(11) **EP 0 355 731 B1**
(45) Veröffentlichungstag und Bekanntmachung des Hinweises auf die Patenterteilung: **28.12.1994**
(21) Anmeldenummer: 89115250.6
(22) Anmeldetag: 18.08.1989
(51) Int. Cl.: H01H 3/40, F16H 1/46, G05G 21/00

(54) **Vorrichtung zur Betätigung von Schaltelementen**
Actuating device for control member
Dispositif d'actionnement d'éléments de circuit

(30) Priorität: 23.08.1988 DE 3828508
(43) Veröffentlichungstag der Anmeldung: 28.02.1990
(73) Patentinhaber: Stromag Aktiengesellschaft, 59425 Unna (DE)
(72) Erfinder: Wientke, Friedrich, D-4708 Kamen (DE); Dieterich, Günter, Ing.grad., D-4708 Kamen (DE)
(74) Vertreter: Wilhelm & Dauster Patentanwälte European Patent Attorneys

(56) Entgegenhaltungen:
- DE-A- 2 913 039
- DE-A- 3 011 133
- DE-B- 1 907 471
- DE-U- 8 334 059
- FR-A- 1 476 471

## Beschreibung

Die Erfindung betrifft eine Vorrichtung zur Betätigung von Schaltelementen nach dem Oberbegriff des Patentanspruches 1.

Bei einer derartigen aus der DE-A- 30 11 133 bekannten Vorrichtung, die insbesondere zur Betätigung von Steuerstrom-Endschaltern eingesetzt wird, ist ein die Antriebsdrehzahl untersetzendes mehrstufiges Planetengetriebe vorgesehen. Das Planetengetriebe besitzt eine zentrale Steckachse, die pro Stufe einen an der Steckachse drehbeweglich angeordneten Hohlradkranz trägt, der auf der einen Seite mit einer Innenverzahnung und auf der entgegengesetzten Seite mit einer Außenverzahnung kleineren Durchmessers versehen ist. Auf der Steckachse sind drehfest Planetenträger angeordnet, die an der Innenverzahnung des Hohlradkranzes kämmende Planeten halten. Die erste Getriebestufe des Planetengetriebes wird über ein drehbeweglich auf der Steckachse gelagertes Sonnenrad angetrieben, das über ein an einer fliegend gelagerten Welle angeordnetes Antriebsritzel mit der separaten Antriebseinheit verbunden ist. Die letzte Getriebestufe besitzt einen drehbar angeordneten Planetenträger, an dem ein Hohlzylinder befestigt ist, der mit Nocken zur Betätigung von Schaltelementen versehen ist. Die bekannte Vorrichtung besitzt infolge der drehbeweglich auf der Steckachse angeordneten Hohlradkränze und der indirekt eingetragenen Antriebsbewegung ein großes Umkehrspiel.

Der Erfindung liegt die Aufgabe zugrunde, eine gattunggemäße Vorrichtung so auszubilden, daß das Umkehrspiel verringert wird.

Diese Aufgabe wird bei einer Vorrichtung der eingangs genannten Art durch die kennzeichnenden Merkmale des Patentanspruches 1 gelöst. Bei der erfindungsgemäßen Vorrichtung ist vorgesehen, daß im Gehäuse des Planetengetriebes eine mit der separaten Antriebseinheit direkt verbundene Welle gelagert ist, daß mindestens eine Getriebestufe einen gegenüber der Welle koaxial und drehbeweglich angeordneten Planetenträger besitzt, an dem ein Planet gehalten ist, der an einem gegenüber dem Gehäuse festgelegten Hohlradkranz kämmt, wobei die erste Getriebestufe ein Antriebsrad oder ein Sonnenrad besitzt, das drehfest auf der Welle angeordnet ist, und in mindestens einer weiteren Planetengetriebestufe das Schaltteil an dem Planetenträger befestigt ist. Hierdurch wird eine größere Steifigkeit des Getriebes und somit ein geringeres Umkehrspiel erreicht. Da der Antrieb nicht mehr wie bei der bekannten Vorrichtung indirekt über eine Stirnrad-Getriebestufe, sondern direkt von der mit der Antriebseinheit verbundenen Antriebswelle auf das Sonnenrad erfolgt, treten bei der neuen Vorrichtung auch keine Achsabstandsfehler auf. Das Antriebsmoment wird mittig und gleichmäßig auf die Planetenräder übertragen.

Weitere Merkmale und Vorteile der Erfindung sind in den Unteransprüchen aufgeführt.

Eine vorteilhafte Ausführungsform der Erfindung sieht vor, daß das Planetengetriebe mit Planetenträgern ausgebildet ist, die drehbeweglich entweder auf der Welle oder am Hohlradkranz gelagert sind.

Die Planetenträger können mit einer Außenverzahnung zum Antrieb von Planeten ausgebildet sein. Derartige Planetenträger übertragen somit die Drehbewegung zwischen zwei Getriebestufen.

Eine vorteilhafte Ausgestaltung der Erfindung sieht vor, daß die Hohlradkränze der Getriebestufen gleichartig ausgebildet sind. Hierdurch wird ein besonders einfach herstellbares Planetengetriebe geschaffen.

Die Hohlradkränze können mit einer Innen- und Außenverzahnung ausgebildet sein. An der Innenverzahnung kämmen die Planeten der einzelnen Getriebestufen.

Die Fixierung der Hohlradkränze im Gehäuse kann in einfacher Weise dadurch erreicht werden, daß am Außenumfang der Hohlradkränze mindestens eine Lasche angeordnet ist, die in eine Aussparung des Gehäuses eingreift. Es ist vorteilhaft, wenn diese Laschen entfernbar ausgebildet sind, da derartige Hohlradkränze dann in beide Getriebeteile einsetzbar sind.

Eine vorteilhafte Ausführungsform der Erfindung sieht vor, daß das Planetengetriebe ein erstes Getriebeteil lediglich zur Untersetzung der Antriebsdrehzahl und ein zweites Getriebeteil mit Schaltteilen besitzt. Im ersten Getriebeteil wird die Antriebsdrehzahl, die über die Welle auf das Sonnenrad übertragen wird, untersetzt. Somit wird erreicht, daß im zweiten Getriebeteil die Schaltteile eine Drehung mit wesentlich verringerter Drehzahl ausführen.

Es ist vorteilhaft, wenn im ersten Getriebeteil erste Planetenträger vorgesehen sind, die drehbeweglich auf der Welle gelagert sind und eine Außenverzahnung besitzen. Der Planetenträger der ersten Getriebestufe treibt somit die Planeten der zweiten Getriebestufe an. Hierdurch wird eine stufenweise Reduzierung der Drehzahl erreicht.

Im ersten Getriebeteil werden die Hohlradkränze entweder mit den Laschen im Gehäuse drehfest gehalten, oder es wird der Hohlradkranz, der die letzte Getriebestufe bildet, ähnlich wie auch die im zweiten Getriebeteil angeordneten Hohlradkränze, über eine Verstellschnecke drehbar im Gehäuse angeordnet. Mit dieser Ausgestaltung kann eine Korrektur der gesamten Einstellpunkte der Schaltnocken im zweiten Getriebeteil vorgenommen werden.

Eine vorteilhafte Ausgestaltung der Erfindung sieht vor, daß der Planetenträger der letzten Getriebestufe des ersten Getriebeteiles über seine Außenverzahnung mit dem Planeten der ersten Getriebestufe des zweiten Getriebeteiles verbunden ist.

Eine weitere vorteilhafte Ausführungsform sieht vor, daß die Getriebestufen des zweiten Getriebeteiles über Kupplungszahnräder, die drehbeweglich auf der Welle gelagert sind und die die Planeten der Getriebestufe antreiben, verbunden sind. Bei dieser Ausführungsform besitzen folglich die Planeten der einzelnen Getriebestufen des zweiten Getriebeteiles gleiche Drehzahl.

Es ist vorteilhaft, wenn im zweiten Getriebeteil an der Außenverzahnung des Hohlradkranzes eine Verstellschnecke angeordnet ist. Hierdurch wird erreicht, daß der Drehwinkel des mit dem Planetenträger verbundenen Schaltteiles stufenlos einstellbar ist. Die Verstellschnecke wird vorzugsweise am Gehäuse des Planetengetriebes befestigt. Sie dient gleichzeitig für den Hohlradkranz als Drehmomentstütze. Durch die gewählte Schnekkensteigung befindet sich der Schnecken-Verstelltrieb in der Selbsthemmung.

Eine vorteilhafte Ausführungsform sieht vor, daß die Planeten an den Planetenträgern an Stiften angeordnet sind. An jeweils einem Planetenträger können verschiedenartig ausgebildete Stifte vorgesehen sein. Hierdurch ist die Stillegung einzelner Getriebestufen möglich. Es kann beispielsweise vorgesehen sein, daß die Planeten eine eckige Innenbohrung besitzen. Bei dieser Ausführungsform können an den Planetenträgern runde Stifte vorgesehen sein, die die Planeten mit der eckigen Innenbohrung drehbeweglich aufnehmen. An anderen am Planetenträger angeordneten eckigen Stiften sind die Planeten drehfest fixiert. Soll nun eine Getriebestufe stillgelegt werden, so werden die Planeten von den runden Stiften auf die eckigen Stifte umgesteckt. Weiterhin werden die Laschen zur Fixierung der Hohlradkränze entfernt, so daß der Planetenträger und der Hohlradkranz eine gemeinsame Drehbewegung ausführen.

Eine vorteilhafte Ausführungsform sieht vor, daß das Schaltteil als Nockenscheibe mit einem Schaltnocken am Außenumfang ausgebildet ist. Die Nockenscheibe kann vorzugsweise mit Befestigungsmuffen zur Befestigung an den eckigen Stiften des Planetenträgers ausgebildet sein.

Vorteilhafte Ausführungsformen der Erfindung sind in der Zeichnung dargestellt und werden nachfolgend beschrieben. Es zeigen:
- Fig. 1: eine Ausführungsform der Erfindung in prinzipieller Darstellung,
- Fig. 2: eine schematische Darstellung der Ausführungsform gemäß Fig. 1 im Längsschnitt und in Draufsicht,
- Fig. 3: eine Ansicht in Richtung des Pfeiles III gemäß Fig. 2,
- Fig. 4: den Schnitt längs der Linie IV-IV gemäß Fig. 3,
- Fig. 5: eine Ansicht einer Getriebestufe in Funktions- und Verriegelungsstellung,
- Fig. 6: eine Nockenscheibe der dargestellten Ausführungsform,
- Fig. 7: einen Planet der dargestellten Ausführungsform,
- Fig. 8: ein Planetenträger des ersten Getriebeteiles,
- Fig. 9: ein Planetenträger des zweiten Getriebeteiles und
- Fig. 10: eine weitere Ausführungsform teilweise im Längsschnitt dargestellt.

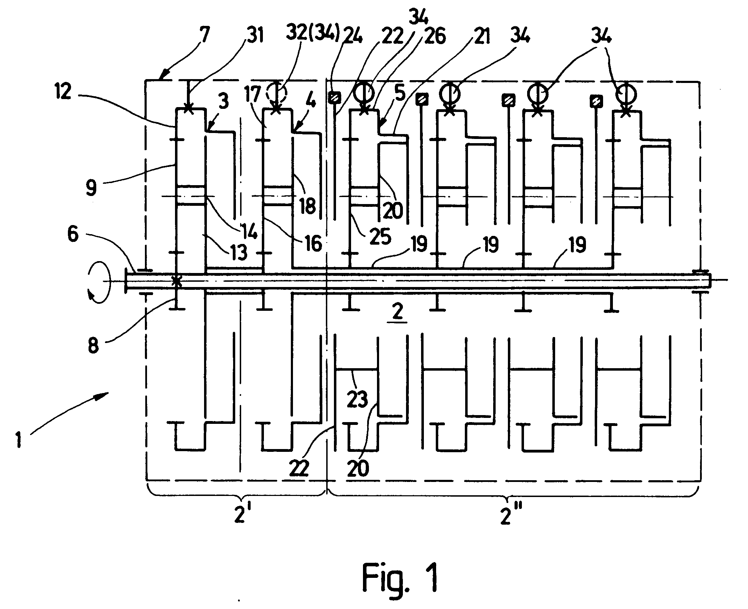

In Fig. 1 ist in einer prinzipiellen Darstellung ein Endschalter (1) gezeigt, der mit einem Planetengetriebe (2) ausgebildet ist, das mit Schaltteilen (22) zur Betätigung von Schaltelementen verbunden ist. Derartige Endschalter (1) kommen an einer in der Zeichnung nicht dargestellten Antriebseinheit zum Einsatz. Diese Antriebseinheit ist beispielsweise mit einem Teil verbunden, das eine vom Endschalter (1) genau gesteuerte Bewegung ausführen soll.

Der Endschalter (1) besitzt ein Gehäuse (7), in dem eine mit der Antriebseinheit verbundene Welle (6) drehbeweglich gelagert ist. Das Gehäuse (7) nimmt ein mehrstufiges Planetengetriebe (2) auf, das zwei verschiedenartige Getriebeteile (2′, 2˝) besitzt. Der erste Getriebeteil (2′), der sich aus der ersten Getriebestufe (3) und der zweiten Getriebestufe (4) aufbaut, hat lediglich die Aufgabe, die Antriebsdrehzahl zu untersetzen. In dem mit dem ersten Getriebeteil (2′) verbundenen zweiten Getriebeteil (2˝) sind Schaltteile (22) angeordnet, die eine Drehbewegung ausführen und in der Zeichnung nicht dargestellte Schaltelemente betätigen. Der Endschalter (1) besitzt vier Schaltteile (22), die eine Drehbewegung mit gleicher Drehzahl ausführen.

Im folgenden soll nun der Aufbau des Planetengetriebes (2) des Endschalters (1) beschrieben werden. Das Planetengetriebe (2) besitzt pro Getriebestufe (3, 4, 5) einen am Gehäuse (7) festgelegten Hohlradkranz (12, 17, 26), an dem eine Innenverzahnung vorgesehen ist. Weiterhin sind gegenüber dem Hohlradkranz (12, 17, 26) bzw. dem Gehäuse (7) drehbeweglich angeordnete Planetenträger (13, 18, 20) vorgesehen, die jedoch in den Getriebeteilen (2′, 2˝) verschiedenartig ausgebildet sind. Die Planetenträger (13, 18) des ersten Getriebeteiles (2′) sind drehbeweglich auf der Welle (6) gelagert und besitzen eine Außenverzahnung. Hiermit wird die Drehbewegung des Planetenträgers der einen Stufe auf die Planeten der anderen Stufe übertragen. An den Planetenträgern der Getriebestufen sind jeweils drei gleichartige Planeten (9, 10, 11) drehbeweglich angeordnet.

Die Planeten (9, 10, 11) der ersten Getriebestufe (3) werden über das drehfest auf der Welle (6) angeordnete Sonnenrad (8) angetrieben. Die Planeten kämmen mit der Innenverzahnung des festgelegten Hohlradkranzes (12), wodurch der Planetenträger (13) eine Drehbewegung ausführt. Über die Außenverzahnung des Planetenträgers (13) werden die Planeten (16) der zweiten Getreibestufe (4) angetrieben, wodurch wiederum der Planetenträger (18) in Drehung versetzt wird.

Der Planetenträger (18) der zweiten Getriebestufe (4) trägt eine Drehbewegung in den zweiten Getriebeteil (2˝) ein. Die Getriebestufen des zweiten Getriebeteiles sind über Kupplungszahnräder (19) miteinander verbunden. Das Kupplungszahnrad (19) der dritten Getriebestufe (5) ist mit dem Planetenträger (18) der zweiten Getriebestufe (4) verbunden, so daß die Planeten des zweiten Getriebeteiles (2˝) des Planetengetriebes (2) jeweils mit gleicher Drehzahl umlaufen. Die vier Getriebestufen des zweiten Getriebeteiles (2˝) des Planetengetriebes (2) sind prinzipiell gleich wie die dritte Getriebestufe ausgebildet. Demgemäß ist jeweils ein Planetenträger (20) vorgesehen, der an einer Gleitfläche (21) des am Gehäuse (7) festgelegten Hohlradkranzes (26) drehbeweglich angeordnet ist.

Die Ausbildung der Getriebestufen des Planetengetriebes (2) mit einem am Gehäuse (7) festgelegten Hohlradkranz (12, 17, 26) und einem drehbeweglich angeordneten Planetenträger (13, 18, 20) bewirkt eine größere Steifigkeit des Getriebes und somit ein geringeres Umkehrspiel. Diese Eigenschaft des Getriebes wird weiterhin noch dadurch erhöht, daß der Antrieb direkt über die Welle (6) und das Sonnenrad (8) erfolgt. Die bei Endschaltern mit einem indirekten Antrieb auftretenden Achsabstandsfehler treten bei dem Endschalter (1) nicht auf. Das Antriebsmoment wird mittig und gleichmäßig auf die Planeten übertragen. Durch die Verringerung des Umkehrspieles kann eine sehr präzise Steuerung der mit dem Endschalter (1) verbundenen Antriebseinheit erzielt werden.

Im ersten Getriebeteil (2′) erfolgt lediglich eine Untersetzung der Antriebsdrehzahl. Die Drehzahl des Planetenträgers (18) der zweiten Getriebestufe bzw. der letzten Getriebestufe des ersten Getriebeteiles (2′) wird in jeder weiteren Stufe des zweiten Getriebeteiles (2˝) in gleicher Weise verringert. Somit haben die Planetenträger der Getriebestufen des zweiten Getriebeteiles (2˝) die gleiche Drehzahl.

Während die Hohlradkränze (12, 17) des ersten Getriebeteiles (2′) mittels Laschen (31, 32) im Gehäuse (7) des Planetengetriebes (2) fixiert sind, sind die Hohlradkränze des zweiten Getriebeteiles (2˝) in ihrer Lage verstellbar am Gehäuse (7) gehalten. Hierzu ist pro Getriebestufe im zweiten Getriebeteil (2˝) eine Verstellschnecke (34) vorgesehen, die in die Außenverzahnung des Hohlradkranzes eingreift. Die Verstellschnecke (34) dient gleichzeitig als Feinverstellung des Schaltteiles (22) und als Drehmomentenstütze für den jeweiligen Hohlradkranz.

Das Planetengetriebe (2) des Endschalters (1) kann in leichter Weise den jeweiligen Bedürfnissen angepaßt werden. Dies ist einerseits dadurch möglich, daß das Sonnenrad (8) stirnseitig mit einer Steckkupplung ausgebildet ist, wodurch eine Verbindung mit weiteren Sonnenrädern möglich ist. Auch können einzelne Getriebestufen des Planetengetriebes (2) in einfacher Weise stillgelegt werden. Dies ist dadurch möglich, daß an den Planetenträgern (13, 18, 20) der Getriebestufen des Planetengetriebes (2) jeweils verschiedenartige Stifte zur Befestigung der Planeten vorgesehen sind. Beim Endschalter (1) sind an jedem Planetenträger (13, 18, 20) jeweils drei runde Stifte (14) und drei eckige Stifte (15) vorgesehen. An den Planeten des Planetengetriebes (2), die beim Endschalter (1) alle gleichartig ausgebildet sind, ist jeweils eine eckige Aufnahme (9′) ausgebildet. Wird ein derartiger Planet an einem runden Stift (14) angeordnet, so kann er eine Drehbewegung ausführen. Durch Umstecken des Planeten auf einen eckigen Stift (15) wird erreicht, daß der Planet gegenüber dem Planetenträger fixiert ist. Wird nun die Fixierung des Hohlradkranzes mit dem Gehäuse (7) gelöst, was im ersten Getriebeteil (2′) durch Entfernung der Laschen (31, 32) in einfacher Weise geschehen kann, kann die Getriebestufe stillgelegt werden. Mit dem gleichen Getriebeteilen läßt sich so die Untersetzung des gesamten Getriebes verändern.

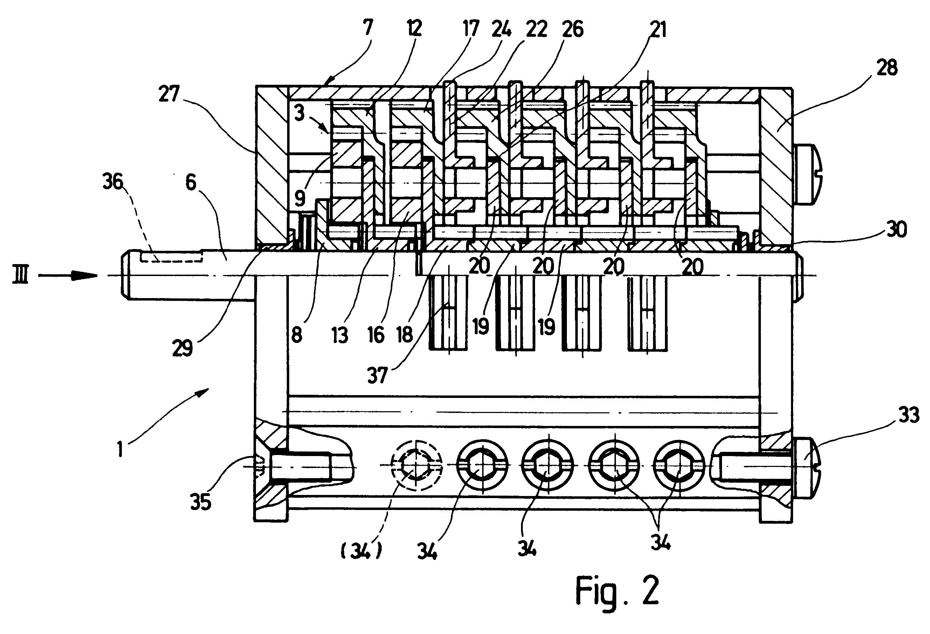

In Fig. 2 ist in schematischer Darstellung der in prinzipieller Weise in Fig. 1 gezeigte Endschalter (1) dargestellt. Das Gehäuse (7) des Endschalters (1) wird aus einem Aluminium-Strangpreßteil hergestellt. Dieses Gehäuse (7) umschließt und stützt den Getriebeblock vollständig. Hierdurch wird erreicht, daß das Planetengetriebe (2) vor Staub und Witterungseinflüssen geschützt ist. Für den Austritt der Nockenscheibe (22) bzw. der Schaltnocken (24) sind Schlitze (37) im Gehäuse (7) ausgebildet. Die Stirnplatten (27, 28) sind mittels Gehäuseschrauben (33, 35) befestigt. Die Welle (6), die über eine Paßfeder (36) mit der nicht dargestellten Antriebseinheit verbunden ist, ist mittels Lagerbuchsen (29, 30) an den Stirnplatten (27, 28) drehbeweglich gelagert.

Das Planetengetriebe (2) des Endschalters (1) besitzt pro Getriebestufe einen Hohlradkranz (12, 17, 26), der in allen Getriebestufen gleichartig ausgebildet ist. Ein derartiger Hohlradkranz besitzt eine Innen- und Außenverzahnung und eine Gleitfläche (21) zur Lagerung der Planetenträger (20) des zweiten Getriebeteiles (2˝). Während im ersten Getriebeteil (2′) die Fixierung der Hohlradkränze am Gehäuse (7) mittels Laschen (31, 32) erfolgt, die am Außenumfang des Hohlradkranzes vorgesehen sind, sind diese im zweiten Getriebeteil (2˝) abgetrennt. Hier erfolgt die Fixierung des Hohlradkranzes über eine Verstellschnecke (34), die an der Außenverzahnung des Hohlradkranzes eingreift.

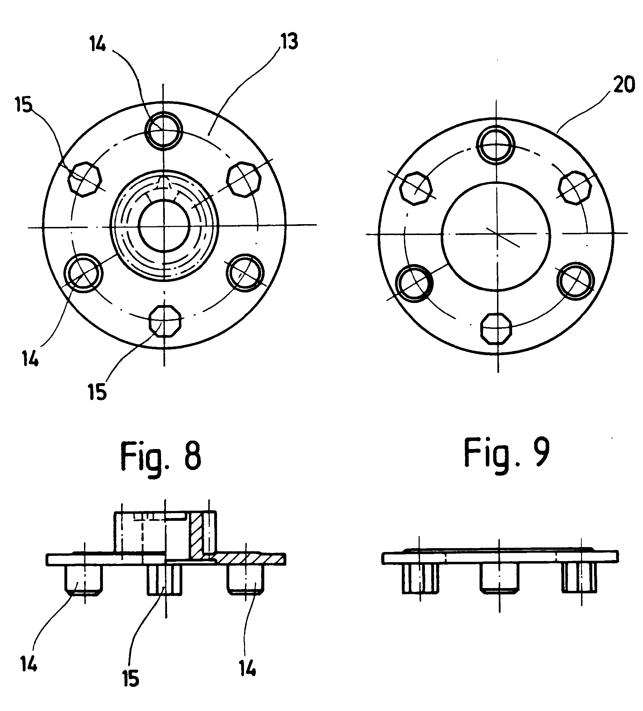

Die Planetenträger (13, 18) des ersten Getriebeteiles (2′), die separat in Fig. 8 dargestellt sind, sind gleitbeweglich auf der Welle (6) gelagert. An ihrer Außenverzahnung kämmen die Planeten der jeweils nächsten Getriebestufe. Die Planetenträger (20) des zweiten Getriebeteiles (2˝), die explizit in Fig.9 dargestellt sind, sind an Gleitflächen (21) des jeweiligen Hohlradkranzes (26) gelagert.

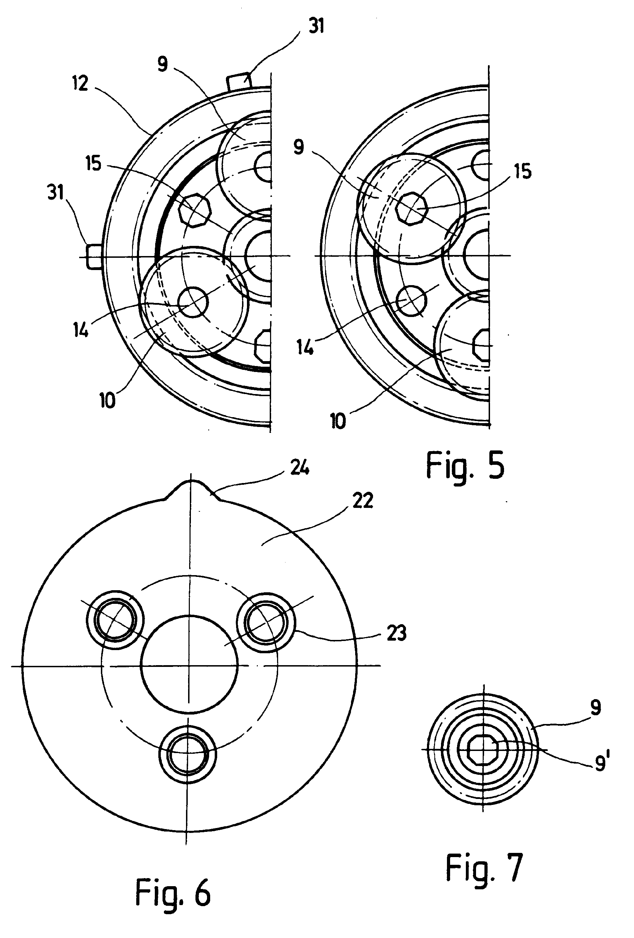

Unterhalb der Mittellinie der Fig. 2 ist eine Draufsicht des Endschalters (1) gezeigt. Im Gehäuse (7) sind im zweiten Getriebeteil (2˝) Schlitze (37) für die Nockenscheiben (22) vorgesehen. Im Endbereich dieser Schlitze (37) sind die in der Zeichnung nicht dargestellten Schaltelemente des Endschalters (1) positioniert. Diese werden durch die an der Nockenscheibe (22) angeordneten Schaltnocken (24) betätigt. Eine beim Endschalter (1) zum Einsatz kommende Nockenscheibe (22) mit einem Schaltnocken (24) ist in Fig. 6 dargestellt. An der Nockenscheibe (22) sind Muffen (23) zur Befestigung an den Stiften der Planetenträger (20) des zweiten Getriebeteiles (2˝) vorgesehen. Die Relativlage der Nockenscheiben (22) bzw. der Schaltnocken (24) gegenüber den Schaltelementen kann durch Verstellschnecken (34) stufenlos verändert werden. Über die Außenverzahnung des Hohlradkranzes kann jede Nockenscheibe einzeln und stufenlos mit der zugehörigen Verstellschnecke verstellt werden. Die Anzahl der Nockenscheiben (22) pro Schaltelement kann verschieden sein. Die Schaltelemente können auf einer Leiterplatte verlötet sein, die am Gehäuse (7) im Bereich des zweiten Getriebeteiles (2˝) befestigt wird.

Es ist auch möglich und vorteilhaft, wie in Fig. 1 und 2 gestrichelt angedeutet, anstelle der Lasche (32) zur Befestigung des die letzte Getriebestufe im ersten Getriebeteil (2′) bildenden Hohlradkranzes (17) eine Verstellschnecke (34) vorzusehen, wie sie für die, im übrigen gleich wie die Hohlradkränze (17) und (12) ausgebildeten, Hohlradkränze (26) des zweiten Getriebeteiles (2˝) vorgesehen sind. Muß bei dieser Ausführungsvariante eine Korrektur der Einstellpunkte aller Schaltnocken (22) im Getriebe (2˝) durchgeführt werden (Seil- oder Kettenlängung), wobei die Einstellung der Schaltnocken zueinander jedoch nicht verändert werden darf, erfolgt dieses mit der zusätzlichen Verstellschnecke (34) der letzten Getriebestufe (Hohlradkranz 17) des Getriebeteiles (2′). Hierdurch wird die zeitaufwendige Einstellung jedes einzelnen Schaltnockens (22) im Getriebeteil (2˝) vermieden. Die Schaltstellungen der einzelnen Schaltnocken (22) zueinander bleiben erhalten. Durch die Anordnung der Verstellschnecke (34) an dem Hohlradkranz (17) des Getriebeteils (2′) ist die Auflösung des Einstellweges der Schaltnocken um das 4,285-fache größer als die direkte Einstellung der Schaltnocken über die Verstellschnecken (34) im Getriebeteil (2˝).

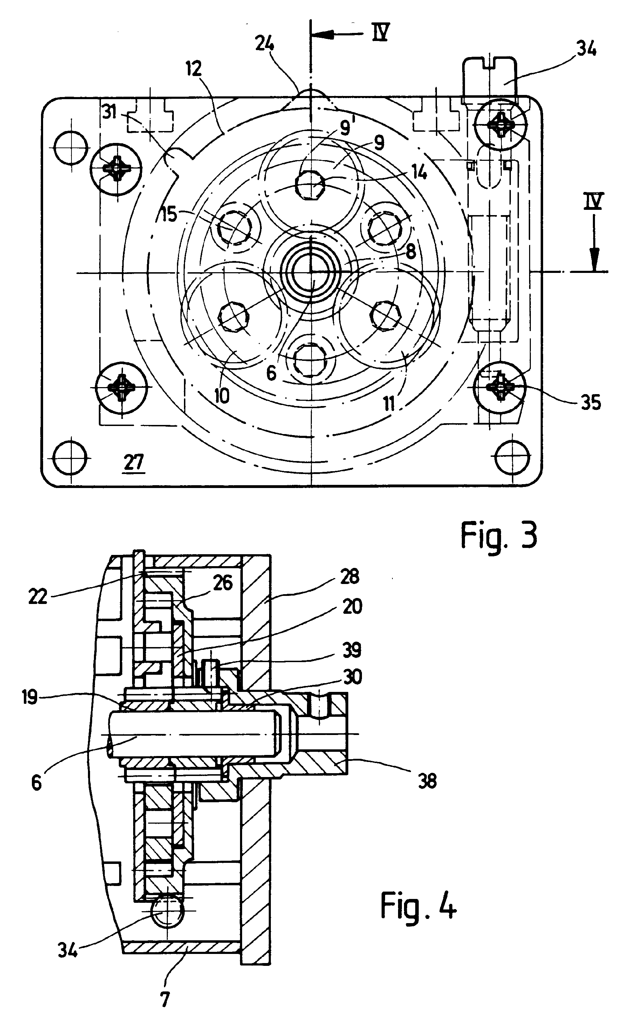

In Fig. 3 ist eine Ansicht in Richtung des Pfeiles III gemäß Fig. 2 gezeigt. Die Stirnplatte (27) ist mittels vier Gehäuseschrauben (35) am Gehäuse (7) befestigt. Strichliniert ist die Anordnung der Planeten (9, 10, 11) zwischen dem Sonnenrad (8) und der Innenverzahnung des Hohlradkranzes (12) dargestellt. Am Außenumfang des Hohlradkranzes (12) ist die entfernbare Lasche (31) gezeigt, die eine Fixierung des Hohlradkranzes (12) im Gehäuse (7) bewirkt. In einer nach hinten versetzten Ebene ist eine Getriebestufe des zweiten Getriebeteiles (2˝) dargestellt, deren Hohlradkranz mittels einer Verstellschnecke (34) am Gehäuse (7) verstellbar fixiert ist und an dessen Planetenträger eine Nockenscheibe (22) mit Schaltnocken (24) angeordnet ist.

Fig. 4 zeigt in vergrößerter Darstellung die letzte Getriebestufe des zweiten Getriebeteiles (2˝) mit einem Flansch (38) für einen nicht dargestellten Meßgeber. Der Flansch (38), der beispielsweise mit einem Potentiometerantrieb verbunden sein kann, ist mittels eines Schraubstiftes (39) am letzten Kupplungszahnrad (19) des Planetengetriebes (2) befestigt. Der Flansch (38) nimmt die Lagerbuchse (30) zur Lagerung der Welle (6) auf.

In Fig. 5 ist eine Getriebestufe des ersten Getriebeteiles (2′) in der linken Darstellung in entriegelter und in der rechten Darstellung in verriegelter Stellung gezeigt. Dies kann, wie schon oben angeführt, durch Umstecken der in Fig. 7 gezeigten Planeten (9) mit eckiger Aufnahme (9′) erreicht werden. Während in der linken Darstellung der Fig. 5 die Planeten (9, 10) auf den runden Stiften (14) drehbeweglich angeordnet sind, sind die gleichen Planeten in der rechten Darstellung auf die eckigen Stifte (15) umgesteckt. Werden nun die Planeten (9, 10, 11) dieser Getriebestufe von den runden Stiften (14) auf die eckigen Stifte (15) umgesteckt und die Laschen (31) am Außenumfang des Hohlradkranzes (12) entfernt, so wird diese Getriebestufe des Planetengetriebes unwirksam gemacht.

Der wesentliche Vorteil des neuen Endschalters ist das geringe Umkehrspiel des Planetengetriebes. Bei einem Planetengetriebe (2), dessen Getriebestufen jeweils aus einem Hohlradkranz (z = 112/46), 3 Planeten (z = 16), einem Planetenträger (z = 14) aufgebaut sind, wurde an einem Funktionsmuster ein Umkehrspiel von weniger als 2° gemessen. Hierdurch wird eine besonders genaue Steuerung der Antriebseinheit möglich.

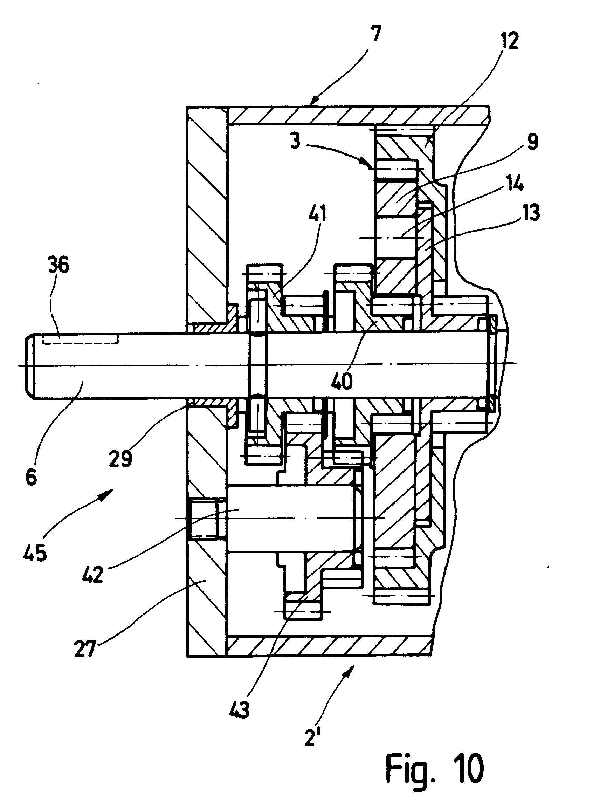

Fig. 10 zeigt eine weitere Ausführungsform der Erfindung. Der Endschalter (45) unterscheidet sich von Endschalter (1) durch ein andersartig aufgebautes erstes Getriebeteil (2′). Das zweite Getriebeteil (2˝) ist entsprechend dem Endschalter (1) aus gebildet. Die zur Beschreibung des Endschalters (1) eingeführte Bezugszeichen sind beim Endschalter (45) entsprechend verwendet.

Auf der über die Paßfeder (36) mit der nicht gezeigten Antriebseinheit verbundenen Welle (6) ist drehfest ein Antriebsrad (41) befestigt. Das Antriebsrad (41) treibt über seine Außenverzahnung ein auf der Achse (42) drehbeweglich angeordnetes Zahnrad (43) an. Die Achse (42) ist drehfest mit der vorderen Stirnplatte (27) des Gehäuses (7) verschraubt. Das Zahnrad (43) besitzt zwei Außenverzahnungen, wobei das drehbeweglich auf der Welle (6) gelagerte Sonnenrad (40) der ersten Getriebestufe (3) mit der Außenverzahnung mit kleinerem Durchmesser kämmt. In diesem Getriebeteil wird folglich eine Untersetzung der Antriebsdrehzahl erreicht.

## Patentansprüche

1. Vorrichtung zur Betätigung von Schaltelementen, mit einem die Antriebsdrehzahl einer separaten Antriebseinheit untersetzenden mehrstufigen Planetengetriebe, das ein Schaltteil antreibt, das nach einer festlegbaren Drehung das Schaltelement betätigt, dadurch gekennzeichnet, daß im Gehäuse (7) des Planetengetriebes (2) eine mit der separaten Antriebseinheit direkt verbundene Welle (6) gelagert ist, daß mindestens eine Getriebestufe (3, 4, 5) einen gegenüber der Welle (6) koaxial und drehbeweglich angeordneten Planetenträger (13, 18, 20) besitzt, an dem ein Planet (9, 16, 25) gehalten ist, der an einem gegenüber dem Gehäuse (7) festgelegten Hohlradkranz (12, 17, 26) kämmt, wobei die erste Getriebestufe (3) ein Antriebsrad (41) oder ein Sonnenrad (8) besitzt, das drehfest auf der Welle (6) angeordnet ist, und daß in mindestens einer weiteren Planetengetriebestufe (5) das Schaltteil (22) an deren Planetenträger (20) befestigt ist.

2. Vorrichtung nach Anspruch 1, dadurch gekennzeichnet, daß der Planetenträger (13) der Getriebestufen drehbeweglich auf der Welle (6) gelagert ist.

3. Vorrichtung nach Anspruch 1, dadurch gekennzeichnet, daß der Planetenträger (20) der Getriebestufen drehbeweglich am Hohlradkranz (26) gelagert ist.

4. Vorrichtung nach einem der Ansprüche 1 bis 3, dadurch gekennzeichnet, daß der Planetenträger (13) eine Außenverzahnung zum Antrieb eines Planeten (16) besitzt.

5. Vorrichtung nach einem der Ansprüche 1 bis 4, dadurch gekennzeichnet, daß die Hohlradkränze (12, 17, 26) der Getriebestufen (3, 4, 5) gleichartig ausgebildet sind.

6. Vorrichtung nach einem der Ansprüche 1 bis 5, dadurch gekennzeichnet, daß die Hohlradkränze (12, 17, 26) eine Innen- und Außenverzahnung besitzen.

7. Vorrichtung nach einem der Ansprüche 1 bis 6, dadurch gekennzeichnet, daß an den Hohlradkränzen (12, 17, 26) mindestens eine entfernbare Lasche (31) angeordnet ist.

8. Vorrichtung nach einem der Ansprüche 1 bis 7, dadurch gekennzeichnet, daß das Planetengetriebe (2) ein erstes Getriebeteil (2′) lediglich zur Untersetzung und ein zweites Getriebeteil (2˝) mit Schaltteilen (22) besitzt.

9. Vorrichtung nach Anspruch 8, dadurch gekennzeichnet, daß im ersten Getriebeteil (2′) erste Planetenträger (13, 16) vorgesehen sind, die drehbeweglich auf der Welle (6) gelagert sind und eine Außenverzahnung besitzen.

10. Vorrichtung nach Anspruch 8 oder 9, dadurch gekennzeichnet, daß im ersten Getriebeteil (2′) mindestens einer der Hohlradkränze (12, 17) mit mindestens einer Lasche (31, 32) im Gehäuse (7) drehfest gehalten ist.

11. Vorrichtung nach einem der Ansprüche 8 bis 10, dadurch gekennzeichnet, daß im zweiten Getriebeteil (2˝) zweite Planetenträger (20) vorgesehen sind, die drehbeweglich an den Hohlradkränzen (26) gelagert sind.

12. Vorrichtung nach einem der Ansprüche 8 bis 11, dadurch gekennzeichnet, daß im zweiten Getriebeteil (2˝) die Getriebestufen über die die Planeten antreibenden Kupplungszahnräder (19) verbunden sind, die drehbeweglich auf der Welle (6) angeordnet sind.

13. Vorrichtung nach Anspruch 6 und einem der Ansprüche 8 bis 12, dadurch gekennzeichnet, daß im zweiten Getriebeteil (2˝) an der Außenverzahnung des Hohlradkranzes (26) eine Verstellschnecke (34) angeordnet ist.

14. Vorrichtung nach einem der Ansprüche 1 bis 13, dadurch gekennzeichnet, daß an dem Planetenträger (13, 18, 20) Stifte (14, 15) zur Aufnahme von Planeten vorgesehen sind.

15. Vorrichtung nach Anspruch 14, dadurch gekennzeichnet, daß die Stifte (14, 15) an einem Planetenträger (13, 18, 20) verschiedenartig ausgebildet sind.

16. Vorrichtung nach einem der Ansprüche 1 bis 15, dadurch gekennzeichnet, daß der Planet (9, 16, 25) eine eckige Innenbohrung besitzt.

17. Vorrichtung nach einem der Ansprüche 1 bis 16, dadurch gekennzeichnet, daß an dem Planetenträger (13, 18, 20) runde Stifte (14) vorgesehen sind, die den Planeten (9, 16, 25) drehbeweglich aufnehmen.

18. Vorrichtung nach einem der Ansprüche 1 bis 17, dadurch gekennzeichnet, daß an dem Planetenträger (13, 18, 20) eckige Stifte (15) zur Fixierung des Planeten (9, 16, 25) vorgesehen sind.

19. Vorrichtung nach einem der Ansprüche 1 bis 18, dadurch gekennzeichnet, daß das Schaltteil als Nockenscheibe (22) mit mindestens einem Schaltnocken (24) am Außenumfang ausgebildet ist.

20. Vorrichtung nach Anspruch 19, dadurch gekennzeichnet, daß die Nockenscheibe (22) mit Befestigungsmuffen (23) zur Befestigung an den Stiften des Planetenträgers ausgebildet ist.

21. Vorrichtung nach Anspruch 10, dadurch gekennzeichnet, daß die letzte Getriebestufe (Hohlradkranz 17) des ersten Getriebeteiles (2′) verdrehbar im Gehäuse (7) angeordnet ist.

22. Vorrichtung nach Anspruch 21, dadurch gekennzeichnet, daß der die letzte Getriebestufe bildende Hohlradkranz (17) mit einer Außenverzahnung versehen ist, in die eine im Gehäuse geführte Verstellschnecke (34) eingreift.

## Claims

1. Device for actuating switching elements, having a multi-stage planetary gear for reducing the drive speed of a separate drive unit, the planetary gear driving a switching member, which actuates the switching element according to a prescribable speed of rotation, characterised in that a shaft (6) directly connected to the separate drive unit is mounted in the housing (7) of the planetary gear (2), in that at least one gear stage (3, 4, 5) has a planet carrier (13,18, 20) mounted coaxially and rotatably with respect to the shaft (6), and a planet wheel (9, 16, 25) is mounted on said planet carrier and meshes with a ring gear ring (12,17, 26) which is fixed with respect to the housing (7), wherein the first gear stage (3) has a drive wheel (41) or sun wheel (8) mounted non-rotatably on the shaft (6), and in that in at least one further planetary gear stage (5) the switching member (22) is fixed to its planet carrier (20).

2. Device according to claim 1, characterised in that the planet carrier (13) of the gear stages is mounted rotatably on the shaft (6).

3. Device according to claim 1, characterised in that the planet carrier (20) of the gear stages is rotatably mounted on the ring gear ring (26).

4. Device according to one of claims 1 to 3, characterised in that the planet carrier (13) has male splines to drive a planet wheel (16).

5. Device according to one of claims 1 to 4, characterised in that the ring gear rings (12,17, 26) of the gear stages (3, 4, 5) are identically formed.

6. Device according to one of claims 1 to 5, characterised in that the ring gear rings (12, 17, 26) have female and male splines.

7. Device according to one of claims 1 to 6, characterised in that at least one removable fishplate (31) is mounted on the ring gear rings (12, 17, 26).

8. Device according to one of claims 1 to 7, characterised in that the planetary gear (2) has a first gear part (2′) solely for reduction and a second gear part (2˝) with switching members (22).

9. Device according to claim 8, characterised in that in the first gear part (2′) first planet carriers (13,16) are provided, which are rotatably mounted on the shaft (6) and have male splines.

10. Device according to claim 8 or 9, characterised in that at least one of the ring gear rings (12, 17) is held non-rotatably in the housing (7) in the first gear part (2′) with at least one fishplate (31, 32).

11. Device according to one of claims 8 to 10, characterised in that in the second gear part (2˝) second planet carriers (20) are provided which are mounted rotatably on the ring gear rings (26).

12. Device according to one of claims 8 to 11, characterised in that in the second gear part (2˝) the gear stages are connected via the clutch wheels (19) which drive the planet wheels and which are rotatably mounted on the shaft (6).

13. Device according to claim 6 and one of claims 8 to 12, characterised in that an adjusting worm (34) is disposed in the second gear part (2˝) against the male splines of the ring gear ring (26).

14. Device according to one of claims 1 to 13, characterised in that pins (14, 15) for receiving planet wheels are provided on the planet carrier (13, 18, 20).

15. Device according to claim 14, characterised in that the pins (14, 15) are differently formed on a planet carrier (13, 18, 20).

16. Device according to one of claims 1 to 15, characterised in that the planet wheel (9, 16, 25) has a square inner bore.

17. Device according to one of claims 1 to 16, characterised in that round pins (14), which receive the planet wheels (9, 16, 25) rotatably, are provided on the planet carrier (13, 18, 20).

18. Device according to one of claims 1 to 17, characterised in that square pins (15) for fixing the planet wheels (9, 16, 25) are provided on the planet carrier (13, 18, 20).

19. Device according to one of claims 1 to 18, characterised in that the switching member is formed as a cam disc (22) having at least one switching cam (24) on the outer circumference.

20. Device according to claim 19, characterised in that the cam disc (22) is formed with fixing bushes (23) for fixing to the pins of the planet carrier.

21. Device according to claim 10, characterised in that the last gear stage (ring gear ring 17) of the first gear part (2′) is rotatably mounted in the housing (7).

22. Device according to claim 21, characterised in that the ring gear ring (17) forming the last gear stage is provided with male splining, in which an adjusting worm (34), guided in the housing, meshes.

## Revendications

1. Dispositif pour l'actionnement d'éléments de commutation comprenant un engrenage planétaire à plusieurs étages démultipliant le nombre de tours d'entraînement d'une unité d'entraînement séparée, ledit engrenage planétaire actionnant une partie du commutateur qui met l'élément de commutation en action selon une rotation pouvant être déterminée, dispositif caractérisé en ce que dans le boîtier (7) de l'engrenage planétaire (2) est disposé un arbre (6) relié directement à l'unité d'entraînement séparée, en ce que au moins un étage d'engrenage (3,4,5) comprend une cage de transmission planétaire (13,18,20) disposée par rapport à l'arbre (6) dans le sens coaxial et en rotation, cage de transmission planétaire sur laquelle est maintenue un engrenage planétaire (9,16,25) qui s'engrène avec une couronne de train planétaire (12,17,26) fixée sur le boîtier (7), le premier étage d'engrenage (3) possédant un engrenage d'entrée (41) ou une roue solaire (8) fixée sur l'arbre (6), et en ce que au moins dans un autre étage d'engrenage planétaire (5) l'élément de commutation (22) est fixé sur sa cage de transmission planétaire (20).

2. Dispositif selon la revendication 1, caractérisé en ce que la cage de transmission planétaire (13) des étages d'engrenage est disposée en rotation sur l'arbre (6).

3. Dispositif selon la revendication 1, caractérisé en ce que la cage de transmission planétaire (20) des étages d'engrenage est disposée en rotation sur la couronne de train planétaire (26).

4. Dispositif selon l'une ou l'autre des revendications 1 à 3, caractérisé en ce que la cage de transmission planétaire (13) possède une denture extérieure pour la commande d'un engrenage planétaire (16).

5. Dispositif selon l'une ou l'autre des revendications 1 à 4, caractérisé en ce que les couronnes de train planétaire (12,17,26) des étages d'engrenage (3,4,5) sont conçues de manière identique.

6. Dispositif selon l'une ou l'autre des revendications 1 à 5, caractérisé en ce que les couronnes de train planétaire (12,17,26) comportent une denture intérieure et extérieure.

7. Dispositif selon l'une ou l'autre des revendications 1 à 6, caractérisé en ce que sur les couronnes de train planétaire (12,17,26) est disposé au moins un collier de fixation (31) démontable.

8. Dispositif selon l'une ou l'autre des revendications 1 à 7, caractérisé en ce que l'engrenage planétaire (2) comprend une première partie d'engrenage (2′) destinée uniquement à la démultiplication et une deuxième partie d'engrenage (2˝) comportant les commutateurs (22).

9. Dispositif selon la revendication 8, caractérisé en ce que dans la première partie d'engrenage (2′) sont prévues des premières cages de transmission planétaire (13,16) disposées en rotation sur l'arbre (6) et possédant une denture extérieure.

10. Dispositif selon l'une ou l'autre des revendications 8 et 9, caractérisé en ce que dans la première partie d'engrenage (2′) est maintenue fixement dans le boîtier (7) au moins une des couronnes de train planétaire (12,17) comprenant au moins un collier de fixation (31,32).

11. Dispositif selon l'une ou l'autre des revendications 8 à 10, caractérisé en ce que dans la deuxième partie d'engrenage (2˝) sont prévues des secondes cages de transmission (20) disposées en rotation sur les couronnes de train planétaire (26).

12. Dispositif selon l'une ou l'autre des revendications 8 à 11, caractérisé en ce que dans la deuxième partie d'engrenage (2˝) les étages d'engrenage sont reliés via les roues d'engrenage (19) actionnant les engrenages planétaires, ces roues d'engrenage étant disposées en rotation sur l'arbre (6).

13. Dispositif selon la revendication 6 et l'une ou l'autre des revendications 8 à 12, caractérisé en ce que dans la deuxième partie d'engrenage (2˝) une vis sans fin de réglage (34) est disposée sur la denture extérieure de la couronne de train planétaire (26).

14. Dispositif selon l'une ou l'autre des revendications 1 à 13, caractérisé en ce que sur les cages de transmission planétaire (13,18,20) sont prévues des broches (14,15) destinées à la réception des engrenages planétaires.

15. Dispositif selon la revendication 14, caractérisé en ce que les broches (14,15) disposées sur les cages de transmission planétaire (13,18,20) sont conçues de manière différente.

16. Dispositif selon l'une ou l'autre des revendications 1 à 15, caractérisé en ce que l'engrenage planétaire (9,16,25) comprend une perforation intérieure angulaire.

17. Dispositif selon l'une ou l'autre des revendications 1 à 16, caractérisé en ce que sur les cages de transmission planétaire (13,18,20) sont prévues des broches circulaires (14) qui reçoivent les engrenages planétaires (9,16,25) en rotation.

18. Dispositif selon l'une ou l'autre des revendications 1 à 17, caractérisé en ce que sur les cages de transmission planétaire (13,18,20) sont prévues des broches angulaires (15) destinées à la fixation des engrenages planétaires (9,16,25).

19. Dispositif selon l'une ou l'autre des revendications 1 à 18, caractérisé en ce que l'élément de commutation est conçu comme un disque à cames (22) comprenant au moins une came de contacteur (25) sur la périphérie extérieure.

20. Dispositif selon la revendication 19, caractérisé en ce que le disque à cames (22) est conçu avec des manchons de fixation (23) destinés à la fixation sur les broches de la cage de transmission planétaire.

21. Dispositif selon la revendication 10, caractérisé en ce que le dernier étage d'engrenage (couronne de train planétaire 17) de la première partie d'engrenage (2′) est disposé en rotation dans le boîtier (7).

22. Dispositif selon la revendication 21, caractérisé en ce que la couronne de train planétaire (17) formant le dernier étage d'engrenage est pourvue d'une denture extérieure dans laquelle s'engrène une vis sans fin de réglage (34) introduite dans le boîtier.
